# EUROPÄISCHE PATENTSCHRIFT

(11) **EP 2 441 623 B1**
(45) Veröffentlichungstag und Bekanntmachung des Hinweises auf die Patenterteilung: **22.06.2016**
(21) Anmeldenummer: 11008642.8
(22) Anmeldetag: 10.10.2009
(51) Int. Cl.: B60R 9/06, B60R 9/10, B60K 31/00

(54) **Lastenträger und fahrzeugseitige Ankopplungsvorrichtung**
Load carrier and vehicular coupling device
Support de charge et dispositif d'accouplement côté véhicule

(30) Priorität: 13.11.2008 DE 102008057181
(43) Veröffentlichungstag der Anmeldung: 18.04.2012
(62) Teilanmeldung aus: 09012846.3
(73) Patentinhaber: WESTFALIA - Automotive GmbH, 33378 Rheda-Wiedenbrück (DE)
(72) Erfinder: Beutin, Jörg, 33334 Gütersloh (DE); Rauer, Georg, 33803 Steinhagen (DE); Röscheisen, Daniel, 33378 Rheda-Wiedenbrück (DE)
(74) Vertreter: Patentanwälte Bregenzer und Reule Partnerschaftsgesellschaft mbB

(56) Entgegenhaltungen:
- DE-A1-102005 002 203
- US-A1- 2008 142 559
- US-B1- 6 598 914

## Beschreibung

Die Erfindung betrifft einen Lastenträger, insbesondere einen Fahrradträger, zum Auf legen einer Last, gemäß dem Oberbegriff des Anspruchs 1. Die Erfindung betrifft ferner eine Überwachungseinrichtung und ein System mit einer fahrzeugseitigen Ankopplungsvorrichtung.

Ein Lastenträger dieser Art ist beispielsweise in der gattungsgemäßen DE 10 2005 002 203 A1 besschrieben.

Ein aus DE 10 2007 023 495 bekannter Lastenträger hat schwenkbare Trägerrinnen, die als Erweiterungsbauteile vor einen Basisträger ausschwenkbar sind.

Der Lastenträger wird beispielsweise an einer Anhängekupplung des Kraftfahrzeuges befestigt, beispielsweise durch Anklemmen an einem Kugelkopf der Anhängekupplung. Durch den Lastenträger nimmt die Gesamtlänge des Kraftfahrzeugs zu. Dadurch ist es besonders schwierig, das Kraftfahrzeug zu rangieren, beispielsweise in eine Parklücke einzuparken. Zudem können die am Kraftfahrzeug eventuellen Parksensoren nicht mehr verwendet werden. Sie erfassen allenfalls den am Kraftfahrzeug bereits befestigten Lastenträger, so dass sie ein Störsignal aussenden, wenn sie nicht ohnehin abgeschaltet werden.

Aus US 2008/0142559 A1 sind aus einem Heck eines Kraftfahrzeugs ausfahrbare und vom Kraftfahrzeug nicht lösbare Trägerstangen zum Auflegen einer Last bekannt, an deren freien Enden Parksensoren angeordnet sind.

Es ist daher die Aufgabe der vorliegenden Erfindung, Mittel bereit zu stellen, die die Handhabung des Kraftfahrzeuges mit angebauten Lastenträgern insbesondere bei Rückwärtsfahrt erleichtern.

Zur Lösung der Aufgabe ist ein Lastenträger gemäß der technischen Lehre des Anspruchs 1 vorgesehen.

Ein Grundgedanke der Erfindung ist es, dass am Lastenträger selbst eine Überwachungseinrichtung vorgesehen ist, mit der ein neben oder hinter dem Lastenträger befindlicher Überwachungsraum überwachbar ist. Der Lastenträger bzw. dessen Überwachungseinrichtung senden Überwachungsdaten an in dem Kraftfahrzeug angeordnete Fahrzeug-Kommunikationsmittel. Die Fahrzeug-Kommunikationsmittel können beispielsweise Bestandteil eines in dem Fahrzeug anordenbaren Empfangsgeräts mit optischen und/oder akustischen Ausgabemitteln bilden. Das Empfangsgerät ist beispielsweise ein Navigationsgerät, ein Mobiltelefon oder dergleichen. Das Empfangsgerät kann an beliebiger, jedoch vorzugsweise im Sichtbereich des Fahrzeugführers gelegener Stelle im Kraftfahrzeug angeordnet werden und bildet insoweit ein mobiles Empfangsgerät.

Insbesondere bei dieser Ausführungsform ist es zweckmäßig, wenn die Träger-Kommunikationsmittel zu einer drahtlosen Kommunikation, beispielsweise über Funk, mittels optischer Datenübertragung oder dergleichen, mit den Fahrzeug-Kommunikationsmitteln ausgestaltet sind. Wenn das Empfangsgerät beispielsweise ein Mobiltelefon ist, ist eine Kommunikation über Bluetooth vorteilhaft. Eine Ausgestaltung der Erfindung kann vorsehen, dass für das Mobiltelefon ein in dasselbe ladbares Softwaremodul vorgesehen ist, das die Kommunikation mit den Träger-Kommunikationsmitteln ermöglicht. Es versteht sich, dass auch bei einem "mobilen" fahrzeugseitigen Empfangsgerät eine leitungsgebundene Kommunikation prinzipiell auch möglich ist und den Vorteil einer höheren Störfestigkeit bietet.

Der Lastenträger weist eine elektrische Kontakteinrichtung zur elektrischen Verbindung mit einem Bordnetz des Kraftfahrzeugs auf. Über die elektrische Kontakteinrichtung, die einen Stecker zum Einstecken in einer Anhängersteckdose des Kraftfahrzeugs aufweist, kann der Lastenträger, insbesondere die Überwachungseinrichtung, mit elektrischer Energie versorgt werden. Aber auch die elektrische Energieversorgung von beispielsweise Heckleuchten des Lastenträgers ist über die Kontakteinrichtung möglich.

Eine vorteilhafte Ausgestaltung der Erfindung sieht vor, dass zur Aktivierung und/oder zur Stromversorgung der Überwachungseinrichtung ein Rückfahrsignalkontakt der elektrischen Kontakteinrichtung mit der Überwachungseinrichtung verbunden ist. Vorteilhaft ist die Überwachungseinrichtung auch mit einem Massekontakt der Kontakteinrichtung verbunden.

Der Rückfahrsignalkontakt dient z.B. zur elektrischen Stromversorgung eines Rückfahrscheinwerfers des Lastenträgers. Es versteht sich, dass der erfindungsgemäße Lastenträger zwar zweckmäßigerweise einen Rückfahrscheinwerfer aufweist, dies aber keine zwingende Voraussetzung für die elektrische Verbindung der Überwachungseinrichtung mit einem seitens des Kraftfahrzeugs für einen Rückfahrscheinwerfer vorgesehenen Rückfahrsignalkontakt ist.

Es ist z.B. auch möglich, dass die Überwachungseinrichtung beispielsweise auch mit einem Schaltkontakt eines Getriebes des Fahrzeugs verbunden ist, der das Einlegen eines Rückwärtsganges vorteilhaft über den Rückfahrsignalkontakt der elektrischen Kontakteinrichtung signalisiert.

Weiter kann eine Steuerung der Anhängekupplung das Rückfahrsignal erzeugen.

Eine weitere Variante der Erfindung kann vorsehen, dass die Überwachungseinrichtung zum Empfang eines fahrzeugseitig erzeugten Rückfahrsignales, das beispielsweise über einen Bus des Kraftfahrzeugs versendet wird, ausgestaltet ist.

Unter anderem für diese Ausführungsform der Erfindung ist vorteilhaft, wenn die Träger-Kommunikationsmittel eine Bus-Schnittstelle zur Ankopplung an einen fahrzeugseitigen Kommunikationsbus des Kraftfahrzeuges aufweisen. Der Bus ist beispielsweise ein CAN-Bus, ein LIN-Bus, ein FlexRay-Bus, ein MOST-Bus oder dergleichen (LIN = Local Interconnect Network, CAN = Controller Area Network, MOST = Media Oriented Systems Transport).

Es ist auch möglich, dass auf Seiten der fahrzeugseitigen Ankopplungsvorrichtung eine entsprechende Bus-Schnittstelle vorgesehen ist. Für die Kommunikation zwischen der Ankopplungsvorrichtung und der Überwachungseinrichtung kann beispielsweise ein proprietäres Protokoll oder die nachfolgend beschriebene Modulation und Demodulation verwendet werden. Die dann vorteilhafte Ankopplung an den fahrzeugseitigen Bus realisiert dann die erfindungsgemäße Ankopplungsvorrichtung.

Vorteilhaft ist es nämlich, wenn die Überwachungsdaten auf ein Energiesignal auf moduliert werden. Dazu ist es vorteilhaft, wenn bei den Träger-Kommunikationsmitteln ein Modulator zum Aufmodulieren der Überwachungsdaten auf das Energiesignal und bei den Fahrzeug-Kommunikationsmitteln ein korrespondierender Demodulator zum Demodulieren der Überwachungsdaten von dem Energiesignal vorhanden ist.

Der mindestens eine Überwachungssensor umfasst zweckmäßigerweise einen Distanzsensor für eine insbesondere auf Ultraschall basierenden Messung einer Distanz zwischen dem Lastenträger und einem in dem Überwachungsraum befindlichen Hindernis. Selbstverständlich sind zweckmäßigerweise mehrere, nebeneinander angeordnete Überwachungssensoren vorteilhaft.

Der Überwachungssensor kann auch eine Kamera zur optischen Erfassung des Überwachungsraums umfassen, wobei dann die Überwachungsdaten Bilddaten enthalten. Es versteht sich, dass beides, sowohl eine Distanzmessung als auch eine optische Erfassung, bei einem Lastenträger vorteilhaft vorgesehen sein können.

Der mindestens eine Überwachungssensor ist zweckmäßigerweise in ein Bauteil, beispielsweise ein Gestellbauteil, einen Kennzeichenträger, eine Heckleuchte oder dergleichen, des Lastenträgers integriert. Die Anordnung des Überwachungssensors in einer Heckleuchte des Lastenträgers hat den Vorteil, dass er bereits in einem elektrisch mit Strom versorgten Bauteil angeordnet ist, mithin die Verbindung mit einer Steuerung der Überwachungseinrichtung besonders einfach ist.

Zweckmäßigerweise bildet das den Überwachungssensor aufnehmende Bauteil einen integralen Bestandteil des Lastenträgers. Das Bauteil weist vorteilhaft einen Aufnahmeraum für den mindestens einen Überwachungssensor auf. Hier ist auch eine Nachrüstlösung möglich, d.h. der Lastenträger hat an sich schon die Aufnahmeräume für einen oder mehrere Überwachungssensoren, die bei Bedarf nachgerüstet werden können.

Vorteilhaft ist es, wenn der mindestens eine Überwachungssensor nicht oder nur unwesentlich vor das ihn aufnehmende Bauteil vorsteht. Dadurch ist ein mechanischer Schutz realisiert.

Eine weitere Variante der Erfindung kann vorsehen, dass mehrere Komponenten der Überwachungseinrichtung in einem gemeinsamen Schutzgehäuse angeordnet sind. Dieses Schutzgehäuse kann einen integralen Bestandteil eines Lastenträgers bilden, eignet sich aber in einer anderen Ausgestaltung vorteilhaft dazu, als Ganzes in der Art eines Moduls nachträglich an dem Lastenträger angeordnet zu werden. Beispielsweise sind in dem Schutzgehäuse oder in dem Überwachungsmodul nicht nur einer der Überwachungssensoren, sondern mindestens ein zweiter Überwachungssensor und/oder die Träger-Kommunikationsmittel, ganz oder zumindest teilweise, angeordnet. Ein gemeinsames Schutzgehäuse ermöglicht auf besonders effiziente Weise, die elektrischen und somit eventuell empfindlichen Komponenten der Überwachungseinrichtung zu schützen. Zudem ist die Anzahl der Bauteile, die an einem Lastenträger bei nachträglicher Montage anzubringen sind, verringert. Auch die erforderlichen Leitungen, die beispielsweise zwischen Überwachungssensoren und den Träger-Kommunikationsmitteln zu verlegen sind, können in dem gemeinsamen Schutzgehäuse mit Vorteil untergebracht werden. Eine vorteilhafte Ausgestaltung der Erfindung sieht vor, dass nur ein einziges oder gegebenenfalls auch zwei oder drei Schutzgehäuse mit sämtlichen Überwachungssensoren sowie vorteilhaft auch den Träger-Kommunikationsmitteln als Anbaumodul ausgestattet ist bzw. sind, das bzw. die vorzugsweise nachträglich am Lastenträger anordenbar oder angeordnet ist/sind.

Das Schutzgehäuse und/oder Anbaumodul hat zweckmäßigerweise Verbindungsmittel, beispielsweise Krallen, Haken, Rastmittel, Bohrungen zum Verschrauben und dergleichen, um das Schutzgehäuse bzw. Anbaumodul mit einer Tragstruktur, beispielsweise einem Rahmen, des Lastenträgers zu verbinden. Vorteilhaft sind an dem Schutzgehäuse auch elektrische Verbindungskontakte zur elektrischen Verbindung mit einem elektrischen Bauteil, beispielsweise einer Heckleuchte des Lastenträgers, einem Anschlusskabel zu einer Anhängersteckdose oder dergleichen vorgesehen.

Eine vorteilhafte Ausgestaltung sieht dabei vor, dass die Verbindungskontakte der Überwachungseinrichtung beispielsweise in der Art einer Anhängersteckdose ausgestaltet sind oder Bestandteile einer solchen Steckdose bilden. Die Überwachungseinrichtung weist bei dieser Ausgestaltung zweckmäßigerweise noch einen mit der Anhängersteckdose elektrisch verbundenen Anschlussstecker zum elektrischen Anschluss an das Kraftfahrzeug auf. Eine Ausgestaltung kann dabei vorsehen, dass sowohl der Anschlussstecker als auch die Anhängersteckdose der Überwachungseinrichtung an einem einzigen elektrischen Bauteil angeordnet sind, das sozusagen zwischen die fahrzeugseitige Anhängersteckdose und den Anschlussstecker des Lastenträgers eingesteckt wird. Eine andere Ausführungsform kann auch vorsehen, dass die Anhängersteckdose beispielsweise an dem vorgenannten Modul oder Schutzgehäuse angeordnet ist, wobei in diese Anhängersteckdose dann das Anschlusskabel bzw. der Anschlussstecker des Lastenträgers eingesteckt wird. Der Anschlussstecker der Überwachungseinrichtung weist dann ein entsprechend langes Anschlusskabel auf, so dass der Anschlussstecker der Überwachungseinrichtung in eine fahrzeugseitige Anhängersteckdose eingesteckt werden kann. In beiden vorgenannten Fällen ist die Überwachungseinrichtung sozusagen zwischen die fahrzeugseitigen Anschlusskontakte und die lastenträgerseitigen Anschlusskontakte elektrisch eingeschleift. Die Anzahl der erforderlichen Kontakte ist gering. Ein elektrisches Netz des Lastenträgers bleibt von der anzubauenden Überwachungseinrichtung, insbesondere dem Überwachungsmodul, unbeeinflusst, d.h. es müssen keine elektrischen Modifikationen zur Anordnung der erfindungsgemäßen Überwachungseinrichtung an dem Lastenträger vorgenommen werden.

Die Überwachungseinrichtung oder die fahrzeugseitige Ankopplungsvorrichtung weisen zweckmäßigerweise Abschaltmittel für eine Kraftfahrzeug-Überwachungseinrichtung auf. Die Kraftfahrzeug-Überwachungseinrichtung dient zur Überwachung eines Überwachungsraums hinter dem Heckbereich des Kraftfahrzeugs, beispielsweise mittels Ultraschall, anhand einer optischen Erfassung (Kamera) oder dergleichen. Die Abschaltmittel schalten diese Kraftfahrzeug-Überwachungseinrichtung zumindest bei aktiver Lastenträger-Überwachungseinrichtung ab. Es versteht sich, dass die Kraftfahrzeug-Überwachungseinrichtung auch beispielsweise bereits beim Einstecken der Kontakteinrichtung des Lastenträgers in eine Anhängersteckdose des Kraftfahrzeugs deaktivierbar ist.

Die Abschaltmittel können auch für ein Umschalten von optischen und/oder akustischen Ausgabemitteln des Kraftfahrzeugs sorgen, so dass diese an Stelle der von der Kraftfahrzeug-Überwachungseinrichtung übermittelten Überwachungsdaten diejenigen der Überwachungseinrichtung des Lastenträgers ausgeben, beispielsweise als optische oder akustische Warnsignale, als ein Bild an einem Monitor des Kraftfahrzeugs oder dergleichen.

Die fahrzeugseitige Ankopplungsvorrichtung umfasst zweckmäßigerweise optische und/oder akustische Ausgabemittel zur Ausgabe der Überwachungsdaten. Somit kann die Ankopplungsvorrichtung bereits die Überwachungsdaten ausgeben. Vorteilhaft ist jedoch auch eine Integration der Ankopplungsvorrichtung in ein Bordnetz des Kraftfahrzeugs. Die Ankopplungsvorrichtung hat zweckmäßigerweise Sendemittel zum Senden von aus den Überwachungsdaten generierten Daten an eine fahrzeugseitige optische und/oder akustische Ausgabeeinrichtung, mit der beispielsweise optische oder akustische Warnsignale, ein Bild des Überwachungsraum der Lastenträger-Überwachungseinrichtung oder dergleichen, ausgebbar sind. Somit realisiert die Ankopplungsvorrichtung eine Ankopplung der Lastenträger-Überwachungseinrichtung an bereits bei dem Kraftfahrzeug vorhandene Ausgabeeinrichtungen, beispielsweise im Armaturenbereich oder auf einer Heckablage vorhandene optische und akustische Ausgabeeinrichtungen, einen Monitor eines Navigationssystems oder eines sonstigen Displays zur Anzeige optischer Daten oder dergleichen.

Die Ankopplungsvorrichtung ist zweckmäßigerweise zur Ausgabe der Überwachungsdaten auf einem Kommunikationsbus des Kraftfahrzeugs ausgestaltet. Die Überwachungsdaten können von der Ankopplungsvorrichtung dazu noch modifiziert werden, beispielsweise gefiltert, maskiert, in ihrem Format gewandelt oder dergleichen. Die Ankopplungsvorrichtung kann über den Kommunikationsbus beispielsweise auch eine Kraftfahrzeug-Überwachungseinrichtung zur Überwachung eines Überwachungsraums hinter dem Kraftfahrzeug deaktivieren.

Vorteilhaft bildet die Ankopplungsvorrichtung einen Bestandteil einer Steuerungseinrichtung zum Steuern beispielsweise einer Verriegelung, eines Antriebs oder dergleichen der Anhängekupplung. Die Ankopplungsvorrichtung kann auch als ein Modul ausgestaltet sein, das an eine solche Steuerung für die Anhängekupplung anbaubar ist.

Nachfolgend werden Ausführungsbeispiele der Erfindung anhand der Zeichnung erläutert. Es zeigen:

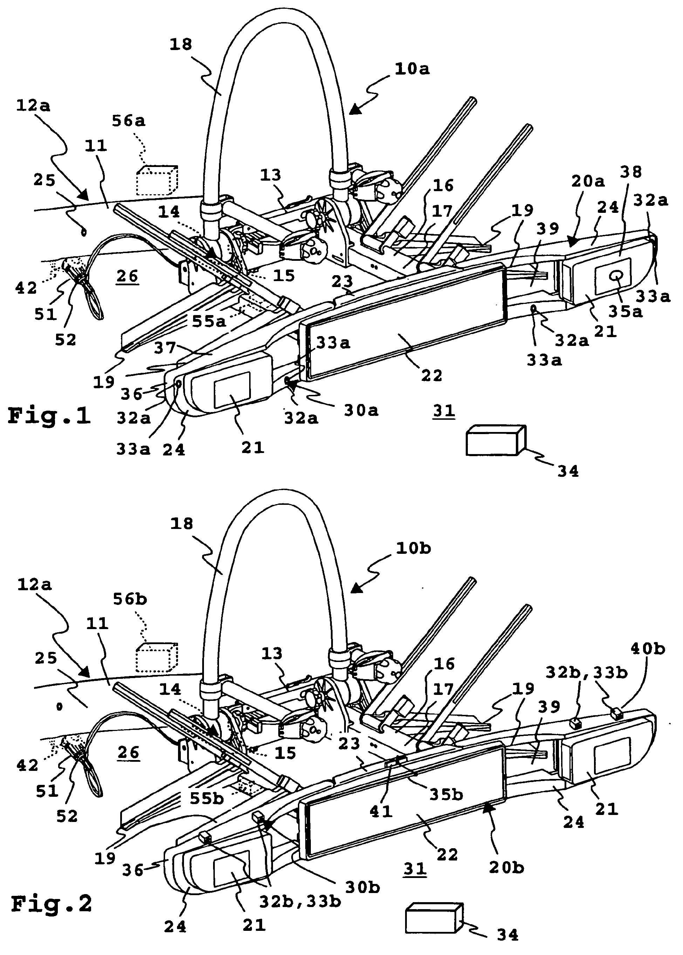

- Figur 1: ein erstes Ausführungsbeispiel eines Lastenträgers mit integrierten Überwachungssensoren im an ein schematisch dargestelltes Kraftfahrzeug angebauten Zustand in perspektivischer Schrägansicht,
- Figur 2: ein zweites Ausführungsbeispiel eines Lastenträgers, der angebaute Überwachungssensoren aufweist, ebenfalls in perspektivischer Schrägansicht,
- Figur 3: ein elektrisches Prinzipschaltbild gemäß einer ersten Ankopplungsvariante des Lastenträgers an das Kraftfahrzeug,
- Figur 4: ein zweites Ausführungsbeispiel einer Ankopplung eines erfindungsgemäßen Lastenträgers an ein Kraftfahrzeug,
- Figur 5: ein drittes Ausführungsbeispiel eines Lastenträgers, der eine in Anbaumodulen integrierte Überwachungssensoren aufweist, ebenfalls in perspektivischer Schrägansicht, und
- Figur 6: eine Detailansicht einer Variante einer in Figur 5 dargestellten Überwachungseinrichtung.

Bei den nachfolgenden Ausführungsbeispielen sind gleiche Komponenten mit denselben Bezugszeichen versehen. Ähnliche Komponenten haben teilweise Bezugszeichen, die sich durch einen Zusatz a, b oder c zu einer Bezugszeichenzahl unterscheiden.

Lastenträger 10a, 10b, 10c sind beispielsweise als Fahrradträger ausgestaltet und können an einem Heckbereich 11 eines Kraftfahrzeugs 12a, 12b befestigt werden. Dazu haben die Lastenträger 10a, 10b, 10c eine Klemmvorrichtung 13 zum Anklemmen an eine Anhängekupplung 14 des Kraftfahrzeugs 12a, 12b. Die Klemmvorrichtung 13 ist beispielsweise an einen Kugelkopf angeklemmt, der am freien Ende eines Kugelhalses 15 der Anhängekupplung 14 angeordnet ist.

Die Klemmvorrichtung 13 ist fest mit einem Rahmen 16 eines Gestells 17 des Lastenträgers 10a, 10b, 10c verbunden, beispielsweise mit einem Querträger des Rahmens 16, von dem in Gebrauchsstellung nach oben ein Haltebügel 18 vorsteht. Ferner sind an in Fahrzeuglängsrichtung ausgerichteten Längsträgern des Rahmens 16 Lastenträgerteile 19 schwenkbar gelagert, beispielsweise Fahrradträgerrinnen zum Abstellen von Fahrrädern, die wiederum am Haltebügel 18 befestigt werden können. An einer hinteren Querseite des Rahmens 16 ist ein Querträger 20a, 20b angeordnet, der sich im Wesentlichen parallel zur Fahrzeugquerrichtung des Kraftfahrzeugs 12a, 12b erstreckt. Der Querträger 20a, 20b bildet sozusagen den heckseitigen Abschluss des Lastenträgers 10a, 10b, 10c.

Der Querträger 20a, 20b dient ferner als Halterung und Träger für Heckleuchten 21 sowie einen Kennzeichenträger 22 zum Halten und Tragen eines Kennzeichens (nicht dargestellt). Der Kennzeichenträger 22 ist zwischen den Heckleuchten 21 angeordnet. Der Kennzeichenträger 22 ist an einem Mittelsegment 23 des Querträgers 20a, 20b angeordnet, das am Rahmen 16 fest oder beweglich gelagert angeordnet ist. Die beiden seitlich neben dem Kennzeichenträger 22 angeordneten Heckleuchten 21 sind an beweglichen Bauteilen befestigt, nämlich an Seitenflügeln 24 des Querträgers 20a, 20b. Die Seitenflügel 24 sind schwenkbar an dem Mittelsegment 23 gelagert. Die Seitenflügel 24 können in eine Ruhestellung zum Rahmen 16 hin geschwenkt werden. In der Zeichnung sind die Seitenflügel 24 in ihre Arbeitsstellung geschwenkt, das heißt vom Rahmen 16 weg.

Auch wenn beim Ausführungsbeispiel ein mehrsegmentiger, und vorzugsweise bewegliche, z.B. aneinander gelagerte oder miteinander verbindbare, Teile aufweisender Querträger 20a oder 20b gezeigt ist, ist die nachfolgend näher beschriebene Erfindung auch bei Lastenträgern realisierbar, deren Bauteile, insbesondere deren hinteres Abschlussbauteil, starr und unbeweglich sind.

Wenn nun wie in der Zeichnung dargestellt der jeweilige Lastenträger 10a, 10b, 10c am Kraftfahrzeug 12a, 12b befestigt ist, können beispielsweise in einem Stoßfänger angeordnete Überwachungssensoren 27, z.B. Distanzsensoren und/oder eine Kamera oder dergleichen, einer Kraftfahrzeug-Überwachungseinrichtung 25 einen Überwachungsraum 26 hinter dem Heckbereich 11 des Kraftfahrzeugs 12a, 12b nicht mehr überwachen. Der Lastenträger 10a, 10b, 10c stört die Kraftfahrzeug-Überwachungseinrichtung 25, so dass sie zweckmäßigerweise abgeschaltet ist, wenn der Lastenträger 10a, 10b, 10c am Kraftfahrzeug 12a, 12b befestigt ist. Hier setzt die Erfindung ein:
Die erfindungsgemäßen Lastenträger 10a, 10b, 10c weisen nämlich selbst jeweils eine Überwachungseinrichtung 30a, 30b, 30c auf, mit denen ein Überwachungsraum 31 hinter dem jeweiligen Lastenträger 10a, 10b, 10c überwachbar ist. Der Überwachungsraum 31 befindet sich an einer vom Kraftfahrzeug 12a, 12b abgewandten freien Seite des Lastenträgers 10a, 10b, 10c. Im Prinzip könnte sich der Überwachungsraum 31 auch seitlich neben den Lastenträger 10a, 10b, 10c erstrecken, beispielsweise nach schräg hinten, wobei dies bei den Ausführungsbeispielen nicht realisiert ist.
Die Überwachungseinrichtungen 30a, 30b, 30c umfassen Überwachungssensoren 32a, 32b, 32c zur Überwachung des Überwachungsraums 31. Die Überwachungssensoren 32a, 32b, 32c enthalten jeweils nebeneinander angeordnete, beispielsweise in einer Reihe angeordnete, Distanzsensoren 33a, 33b, 33c zur Messung einer Distanz zwischen dem Lastenträger 10a, 10b, 10c und einem im Überwachungsraum 31 befindlichen Hindernis 34, beispielsweise einer Mauer, einem Pfosten oder dergleichen. Ferner enthalten die Überwachungseinrichtungen 30a, 30b, 30c jeweils eine Kamera 35a, 35b zur optischen Erfassung des Überwachungsraums 31. Die Kameras 35a, 35b produzieren sozusagen ein Abbild des Überwachungsraums 31.

Beim Lastenträger 10a sind die Überwachungssensoren 32a einem vorteilhaften Konzept folgend in Bauteile des Lastenträgers 10a integriert. Beispielsweise befinden sich die Überwachungssensoren 32a am Gestell 17, vorliegend dem Querträger 20a.

Je ein Distanzsensor 33a ist beim Lastenträger 10a an den einander entgegengesetzten freien Endbereichen 36 des Querträgers 20a angeordnet. Vorliegend befindet sich dieser Distanzsensor 33a an den vom Kennzeichenträger 22 abgewandten Seiten der Heckleuchten 21. Zwischen den Heckleuchten 21 und dem Kennzeichenträger 22 ist jeweils ein weiterer Distanzsensor 33a positioniert.

Je zwei Distanzsensoren 33a, 33b, 33c sind an beweglichen Elementen des Gestells 17, vorliegend den beiden Seitenflügeln 24 angeordnet. Somit können die Distanzsensoren 33a, 33b, 33c bei Nichtgebrauch zu dem Rahmen 16 hin, das heißt in eine geschützte Position geschwenkt werden.

Die Distanzsensoren 33a, 33b, 33c sind in ein vorzugsweise hohles Profil 37 des Querträgers 20a integriert. Die Distanzsensoren 33a, 33b, 33c stehen vor eine hintere, freie Seite des Querträgers 20a nicht vor. Vielmehr sind sie in das Profil 37 vollständig integriert, so dass sie vor Umwelteinflüssen geschützt sind.

Auch die Kamera 35a ist optimal geschützt. Sie ist in eine der Heckleuchten 21 integriert, so dass sie vor die freie hintere Seite der Heckleuchte 21 nicht vorsteht. Die Kamera 35a ist beispielsweise hinter einer transparenten, die Kamera 35a schützenden Abdeckung 38 der in der Zeichnung rechten Heckleuchte 21 des Lastenträgers 10a angeordnet.

Beim Lastenträger 10b sind die Überwachungssensoren 32b nachträglich angeordnet. In diesem Zusammenhang sei aber betont, dass die Überwachungssensoren 32a des Lastenträgers 10a auch als Nachrüstsensoren ausgestaltet sein können, das heißt dass beispielsweise am Gestell 17, beim Ausführungsbeispiel am Querträger 20 Aufnahmeräume, vorzugsweise in Gestalt von Steckausnehmungen, für die Distanzsensoren 33a vorgesehen sind. Dies ist beim Lastenträger 10b nicht der Fall.

An den Seitenflügeln 24 des Querträgers 20b des Lastenträgers 10b sind jeweils zwei zueinander in Querrichtung des Querträgers 20b beabstandete Distanzsensoren 33b angeordnet. Die Distanzsensoren 33b sind beispielsweise jeweils oberhalb der beiden Heckleuchten 21 angeordnet.

Es versteht sich, dass auch oberhalb des Kennzeichenträgers 22 oder an der Unterseite des Querträgers 20b (was selbstverständlich auch für den Querträger 20a des Lastenträgers 10a gilt) Überwachungssensoren angeordnet sein könnten.

Die Anordnung von Überwachungssensoren an der Oberseite des Querträgers 20b hat jedoch Vorteile im Hinblick auf mechanische Beschädigung, beispielsweise durch von der Fahrbahn aufgewirbelte Schmutzteilen oder dergleichen.

Die Überwachungseinrichtung 30b umfasst ferner eine Kamera 35b zur optischen Überwachung des Überwachungsraums 31. Die Kamera 35b ist zweckmäßigerweise in der Quermitte oder im Bereich der Quermitte des Querträgers 20b angeordnet. Vorteilhaft ist die Kamera 35b oberhalb des Kennzeichenträgers 22 positioniert.

Es versteht sich, dass die Überwachungssensoren 32b auch an geschützterer Stelle des Lastenträgers 10b angeordnet sein könnten, beispielsweise in einem Zwischenraum 39 zwischen den Heckleuchten 21 und dem Kennzeichenträger 22.

Eine weitere Variante kann vorsehen, dass beispielsweise Gehäuse 40b für die Distanzsensoren 33b und/oder eine Halterung 41 bzw. ein Träger für die Kamera 35b am Lastenträger 10b vormontiert sind. Die Distanzsensoren 33b und/oder die Kamera 35a können dann nachgerüstet werden.

Die Überwachungssensoren 32a, 32b, 32c überwachen den Überwachungsraum 31 beispielsweise mittels Ultraschall, der vom Hindernis 34 reflektiert wird, in an sich bekannter Weise. Die Kameras 35a, 35b erzeugen in an sich bekannter Weise Bilddaten.

Die Überwachungseinrichtung 30c realisiert ein modulares Konzept. Zwei von exemplarisch vier Überwachungssensoren 32c, beispielsweise Distanzsensoren 33c, sind jeweils in einem Modul 90, 91 angeordnet. Die Module 90, 91 umfassen Gehäuse 40c, die beispielsweise als Schutzgehäuse 92 ausgestaltet sind. Formgestaltung und Kontur der Schutzgehäuse 92 sind so, dass sie jeweils in den Längsendbereichen des Querträgers 20b auf dessen Oberseite anordenbar sind. Die Konturen der Schutzgehäuse 92 korrelieren mit der Kontur des Querträgers 20b, d.h. das beispielsweise eine Vorderseite der Schutzgehäuse 92 einen gekrümmten Verlauf korrespondierend mit der Vorderseite, d.h. der nach hinten freien Seite, des Querträgers 20b aufweisen.

Die Module 90, 91 können mittels beispielsweise an ihrer Unterseite angeordneter Verbindungsmittel 93 an dem Gestell 17 des Lastenträgers 10c lösbar befestigt werden. Die Verbindungsmittel 93 umfassen beispielsweise Haken 94, die in beispielsweise durch Hohlräume oder Verrippungszwischenräume an der Rückseite des Querträgers 20b gebildete Aufnahmen eingreifen. Es versteht sich, dass alternativ auch Rastmittel oder dergleichen möglich sind. Auch ein Ankleben der Module 90, 91 am Querträger 20b oder einem sonstigen Bauteil eines Rahmens oder Gestells eines Lastenträgers ist ohne Weiteres möglich. Weiterhin ist denkbar, dass die Module 90, 91 beispielsweise Durchgangslöcher für Schrauben aufweisen, mit denen sie an dem Gestell 17 anschraubbar sind.

Das Modul 90 umfasst neben zwei der Überwachungssensoren 32c weiterhin Träger-Kommunikationsmittel 55b, die mit in den Kraftfahrzeugen 12a, 12b angeordneten Fahrzeug-Kommunikationsmitteln 56a, 56b zusammenwirken. Mithin sind also in einem einzigen Schutzgehäuse 92 mit Vorteil nicht nur Überwachungssensoren, sondern auch die zur Ankopplung an das Kraftfahrzeug 12a, 12b erforderlichen Kommunikationsmittel vor Umwelteinflüssen geschützt untergebracht.

Das Modul 91 hingegen enthält zwei weitere Überwachungssensoren 32c und ist beispielsweise über Funk oder durch einen nicht dargestellte Kabelverbindung mit dem Modul 90 verbunden. Es wäre aber auch denkbar, dass jedes der Module 90, 91 jeweils Träger-Kommunikationsmittel aufweist.

Auch die elektrische Verbindung der Überwachungseinrichtung 30c mit den sonstigen Komponenten des Lastenträgers 10c ist vorteilhaft gelöst. Beispielsweise sind an der Rückseite der in der Zeichnung linken Heckleuchte 21 elektrische Anschlusskontakte zum Anschluss der Überwachungseinrichtung 30c vorhanden. Die Anschlusskontakte eignen sich zum Einstecken von Verbindungskontakten 95 der Überwachungseinrichtung 30c. Wenn man also das Modul 90, das man auch als Überwachungsmodul bezeichnen könnte, beispielsweise von hinten her auf den linken Arm des Querträgers 20b aufsteckt, werden vorteilhaft zugleich die Verbindungskontakte 95 in die an der Rückseite der Heckleuchte 21 angeordneten Kontakte eingesteckt. Selbstverständlich sind diese Kontakte der Heckleuchte bei Nichtgebrauch mit Vorteil durch einen Deckel verschlossen. Somit ist der Lastenträger 10c für die Nachrüstung mit der Überwachungseinrichtung 30c optimal vorbereitet.

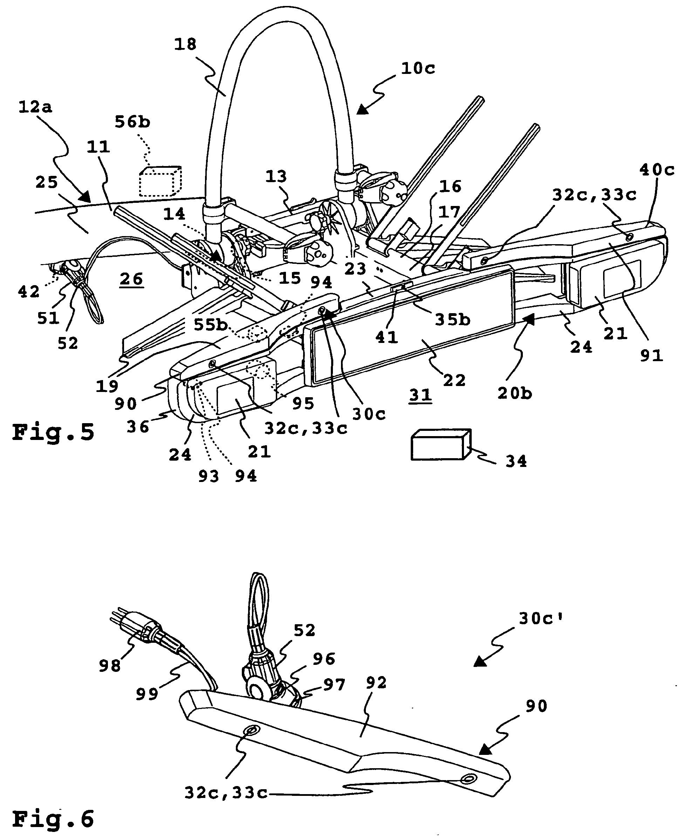

Bei einer in Figur 6 dargestellten Überwachungseinrichtung 30c' handelt es sich um eine Variante der Überwachungseinrichtung 30c. An Stelle der Verbindungskontakte 95 sind Verbindungskontakte 96 vorgesehen, die im Inneren einer Anhängersteckdose 97 angeordnet ist. Die Anhängersteckdose 97 ist beispielsweise an der Rückseite oder einer sonstigen Seite des Schutzgehäuses 92 angeordnet. Eine Anhängersteckdose in der Art der Anhängersteckdose 97 könnte auch entfernt von dem Schutzgehäuse 92 und mit diesem über ein Kabel verbunden sein. Die Anhängersteckdose 97 dient zum Einstecken des vorher bereits erläuterten Steckers 52 des Lastenträgers 10c. Die elektrischen Verbindungskontakte 96 sind mit einem Anschlussstecker 98 verbunden, der seinerseits zum Einstecken in die fahrzeugseitige Anhängersteckdose 42 vorgesehen ist. Ein Kabel 99 zwischen dem Modul 90 und dem Anschlussstecker 98 weist vorteilhaft eine Länge auf, die zum Verlegen am Gestell 17 des Lastenträgers 10c geeignet ist. Zur Anpassung an verschiedene Distanzen könnte das Kabel 99 auch als ein Spiralkabel ausgestaltet sein. Jedenfalls ist auf die in Figur 6 dargestellte Weise eine Einschleifung des Moduls 90 bzw. der Überwachungseinrichtung 30c' in das elektrische Netz des Lastenträgers 10c gewährleistet, ohne dass an diesem elektrische Anpassungen nötig sind. Die Überwachungseinrichtung 30c' erhält über das Einschleifen in das elektrische Netz des Lastenträgers 10c beispielsweise ein Rückfahrsignal und/oder elektrische Versorgungsenergie für ihren Betrieb.

Die Ankopplung der Überwachungseinrichtungen 30a, 30b, 30c an das jeweilige Kraftfahrzeug 12a, 12b erfolgt zweckmäßigerweise nach innovativen Konzepten, von denen nachfolgend einige Varianten erläutert werden, die jeweils für sich alleine oder auch miteinander kombinierbar sind. Sie sind bei Lastenträgern mit integrierten Überwachungssensoren, z.B. in der Art des Lastenträgers 10a, und mit angebauten Überwachungssensoren wahlweise anwendbar, z.B. in der Art des Lastenträgers 10b.

Zur Stromversorgung der Heckleuchten 21 sind die Lastenträger 10a, 10b, 10c über eine Anhängersteckdose 42 mit einem Bordnetz 43 des Kraftfahrzeugs 12a, 12b verbindbar. Das Bordnetz 43 umfasst beispielsweise Versorgungsleitungen 44, 45, 46 zur elektrischen Stromversorgung und Ansteuerung von Heckleuchten 47, beispielsweise Blinkleuchten, Heckleuchten 48, beispielsweise Rücklichtern, und Rückfahr-Heckleuchten 49, beispielsweise Rückfahrscheinwerfern. Die Heckleuchten 47-49 sind ferner mit einem Massepotential 50 des Bordnetzes 43 verbunden. Bereits durch ein einfaches Verbinden einer elektrischen Kontakteinrichtung 51 der Lastenträger 10a, 10b, 10c mit dem Bordnetz 43, beispielsweise durch Einstecken eines Steckers 52 in die Anhängersteckdose 42, ist eine elektrische Verbindung des Lastenträgers 10a, 10b, 10c mit dem Kraftfahrzeug 12a, 12b realisierbar. Die Überwachungseinrichtungen 30a, 30b, 30c werden dann mit elektrischem Strom versorgt und stehen zur Überwachung des Überwachungsraums 31 unmittelbar zur Verfügung.

Von den Überwachungssensoren 32a, 32b, 32c werden Überwachungsdaten 54 erzeugt, beispielsweise durch die Distanzsensoren 33a, 33b, 33c Distanzsignale und durch die Kameras 35a, 35b optische Daten. Es versteht sich, dass jeder der Überwachungssensoren 32a, 32b, 32c individuelle Überwachungsdaten 53 generiert, worauf hier im Einzelnen nicht eingegangen wird.

Zur Übermittlung der Überwachungsdaten 54 sind bei den Lastenträgern 10a, 10b, 10c Träger-Kommunikationsmittel 55a, 55b vorgesehen, die mit in den Kraftfahrzeugen 12a, 12b angeordneten Fahrzeug-Kommunikationsmitteln 56a, 56b zusammenwirken. Dabei sind bei den Lastenträgern 10a, 10b, 10c und den Kraftfahrzeugen 12a, 12b unterschiedliche Konzepte realisiert, die selbstverständlich alternativ einsetzbar sind.

Ein vorteilhaftes Konzept sieht bei beiden Lastenträgern 10a, 10b, 10c vor, dass zur Stromversorgung ein einfaches Einstecken der Kontakteinrichtung 51 in die Anhängersteckdose 42 genügt. Bereits dadurch wird die jeweilige Überwachungseinrichtung 30a, 30b, 30c mit Strom versorgt. Die Distanzsensoren 33a, 33b, 33c sowie die Kameras 35a, 35b sind an einen Massekontakt 57 und mit einem Rückfahrsignalkontakt 58 der Kontakteinrichtung 51 verbunden, wobei aus Gründen der Übersichtlichkeit entsprechende Verbindungsleitungen zu den Kontakten 57, 58 weggelassen sind. Wenn die Kontakteinrichtung 51 in die Anhängersteckdose 42 eingesteckt ist, ist der Massekontakt 57 mit dem Massepotential 50 verbunden.

Ferner erhält dann der Rückfahrsignalkontakt 58 ein Rückfahrsignal 59 wenn das Kraftfahrzeug 12a, 12b rückwärts fährt. Der Rückfahrsignalkontakt 58 ist beispielsweise direkt mit einer der Versorgungsleitungen 46 für die Rückfahr-Heckleuchten 49 (Rückfahrscheinwerfer) verbunden (in der Zeichnung nicht dargestellt) oder erhält das Rückfahrsignal 59 von einer Steuerungseinrichtung 60a, 60b der Anhängekupplung 14.

Die jeweilige Steuerungseinrichtung 60a, 60b kann beispielsweise ausschließlich zur Ansteuerung der Anhängersteckdose 42 vorgesehen sein.

Vorliegend bildet die Steuerungseinrichtung 60a, 60b jedoch eine Steuerung für einen Antrieb 61 zum Bewegen des Kugelhalses 15 zwischen einer hinter das Kraftfahrzeug 12a, 12b vorstehenden Arbeitsstellung, in der der Lastenträger 10a, 10b, 10c auf dem Kugelhals 15 befestigt werden kann, und einer verdeckten, beispielsweise hinter einem Stoßfänger des Kraftfahrzeugs 12a, 12b verborgenen Ruhestellung.

Wenn nun das Kraftfahrzeug 12a oder 12b rückwärts fährt, d.h. ein Rückwärtsgang eingelegt ist, erhalten die Rückfahr-Heckleuchten 49 Strom und leuchten auf. Zugleich wird in erfindungsgemäßer Weise die Überwachungseinrichtung 30a, 30b, 30c aktiviert, wobei die Überwachungssensoren 32a, 32b, 32c mit Strom versorgt werden und somit die Überwachungsdaten 54 generieren können. Die Träger-Kommunikationsmittel 55a, 55b übertragen diese Überwachungsdaten 54 dann an die fahrzeugseitigen Fahrzeug-Kommunikationsmittel 56a, 56b.

Die Kommunikationsmittel 55b, 56b kommunizieren drahtlos miteinander über Funk. Dedizierte Leitungen zur Übertragung der Überwachungsdaten 54 sind nicht erforderlich. Beispielsweise senden die Träger-Kommunikationsmittel 55b über Bluetooth die Überwachungsdaten 54 drahtlos an ein Empfangsgerät 63, das die Fahrzeug-Kommunikationsmittel 56 enthält. Das Empfangsgerät 63 ist beispielsweise ein Navigationsgerät, ein Mobilfunk-Telefon oder dergleichen. Es ist aber auch möglich, dass das Empfangsgerät 63 dediziert zur Kommunikation mit der Überwachungseinrichtung 30b vorgesehen ist, d.h. ein proprietärer Empfänger für die gefunkten Überwachungsdaten 54 ist.

Das Empfangsgerät 63 gibt die empfangenen Überwachungsdaten 54 über optische und akustische Ausgabemittel, z.B. einen Monitor 64 und einen Lautsprecher 65 aus, so dass der Fahrzeugführer über die Situation im Überwachungsraum 31 bei Rückwärtsfahrt des Kraftfahrzeugs 12b informiert ist. Das Empfangsgerät 63 wird zweckmäßigerweise im Bedienbereich, beispielsweise einem Armaturenbereich 66 des Kraftfahrzeugs 12b positioniert, wobei aufgrund des Funkempfangs auch eine andere Anordnung jederzeit möglich ist.

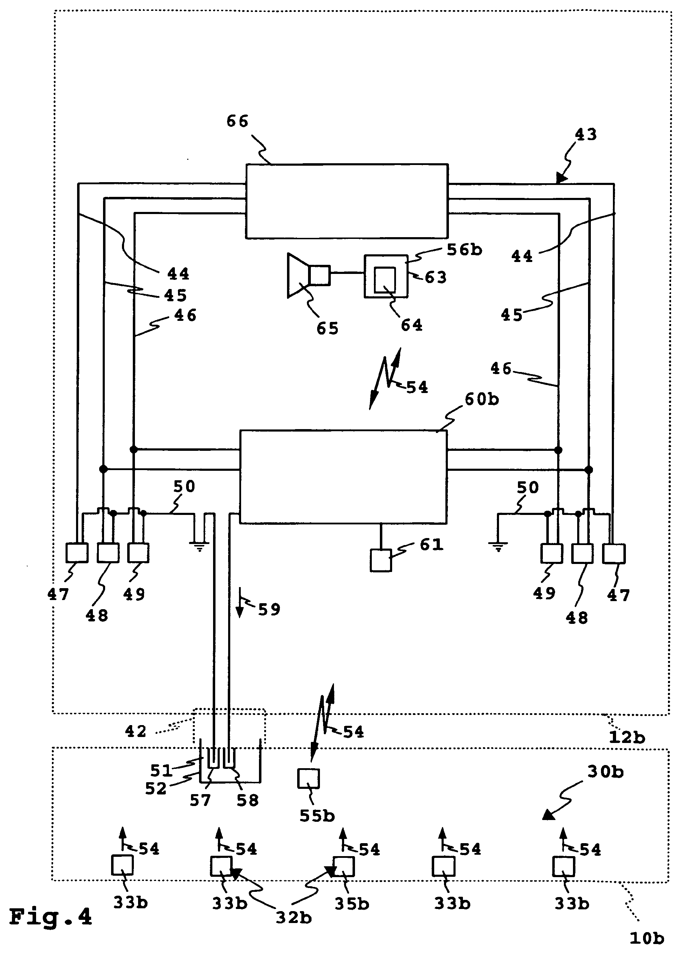

Beim Lastenträger 10a und Kraftfahrzeug 12a wäre selbstverständlich das anhand von Figur 4 vorgestellte Ankopplungskonzept realisierbar. Die Überwachungseinrichtung 30a ist jedoch wesentlich weiter in das Bordnetz 43 und das Informationskonzept des Kraftfahrzeugs 12a eingebunden:
Zur Ausgabe der Überwachungsdaten 54 werden beim Kraftfahrzeug 12a zweckmäßigerweise bordeigene Ausgabemittel verwendet, beispielsweise ein im Armaturenbereich 66 angeordneter Monitor 67. Dieser Monitor 67 kann beispielsweise ein Bestandteil eines bordeigenen Navigationsgeräts des Kraftfahrzeugs 12a sein.

Es versteht sich, dass die Überwachungsdaten 54 drahtlos zu diesem Monitor 67 und/oder ein akustisches Ausgabemittel bildenden Lautsprecher 68 übertragbar sind. Beispielsweise überträgt ein Drahtlos-Sender 69 der Träger-Kommunikationsmittel 55a, beispielsweise über Funk oder optischem Wege, die Überwachungsdaten 54 an einen Drahtlos-Empfänger 88 der Fahrzeug-Kommunikationsmittel 56a an Bord des Kraftfahrzeugs 12a. Der Empfänger 88 bildet zweckmäßigerweise einen Bestandteil der Anhänger-Steuerungseinrichtung 60a oder ist mit dieser verbunden, kann aber auch (nicht dargestellt) ein von einer Anhänger-Steuerungseinrichtung separates Bauteil sein.

Ferner kann ein Drahtlos-Empfänger 89, der mit den optischen und/oder akustischen Fahrzeug-Ausgabemitteln 67, 68 direkt verbunden ist, zum Empfang der Überwachungsdaten 54 und zu deren Weiterleitung an die Fahrzeug-Ausgabemittel 67, 68 vorgesehen sein.

Die Steuerungseinrichtung 60a übermittelt die vom Empfänger 88 empfangenen Überwachungsdaten 54 auf einer zu diesem Zweck vorgesehenen Kommunikationsleitung 87.

Zweckmäßigerweise übermitteln die Fahrzeug-Kommunikationsmittel 56a die vom Empfänger 88 empfangenen Überwachungsdaten 54 auf einem Kommunikationsbus 70 des Kraftfahrzeugs 12b. Dazu ist vorzugsweise ein Buskoppler 71 vorgesehen. Die Ausgabemittel 67, 68 sind mit einem weiteren Buskoppler 72 im Armaturenbereich 66 verbunden, um die Überwachungsdaten 54 ausgeben zu können.

Weiterhin ist eine Bus-Übertragung der Überwachungsdaten 54 vom Lastenträger 10a an das Kraftfahrzeug 12a möglich. Beispielweise ist hierfür bei der Kontakteinrichtung 51 ein Buskontakt 73 vorgesehen, der, wenn der Stecker 52 in die Anhängersteckdose 42 eingesteckt ist, mit einer Bus-Leitung 74 verbunden ist. Die Träger-Kommunikationsmittel 55a umfassen zur Übertragung der Überwachungsdaten 54 auf der Bus-Leitung 74 zweckmäßigerweise einen Buskoppler 75, der mit einem weiteren Buskoppler 76 auf Seiten der Steuerungseinrichtung 60a, 60b kommuniziert.

Es versteht sich, dass die Leitung 74 auch direkt mit dem Kommunikationsbus 70 verbunden sein könnte.

Will man keine dedizierten Busleitungen vorsehen, was weitere Kontakte und Leitungsverbindungen zwischen Kraftfahrzeug und Lastenträger erfordert, ist eine weitere Variante der Erfindung anwendbar. Hierzu ist bei den Träger-Kommunikationsmitteln 55a beispielsweise ein Modulator 86 zum Aufmodulieren der Überwachungsdaten 54 beispielsweise auf elektrische Leitungen, die zur Stromversorgung des Lastenträgers 10a dienen. Dazu ist der Modulator 86 beispielsweise mit den Kontakten 57, 58 verbunden. Auf Seiten des Kraftfahrzeugs 12b ist zum Demodulieren dieser Überwachungsdaten 54 ein Demodulator 77 vorgesehen. Der Demodulator 77 erzeugt beispielsweise Bussignale, die wiederum mit dem Buskoppler 71 in den fahrzeugseitigen Kommunikationsbus eingespeist werden, so dass auf diesem Wege eine einfache Ausgabe der Überwachungsdaten 54 über die bordeigenen Ausgabemittel 67, 68 möglich ist.

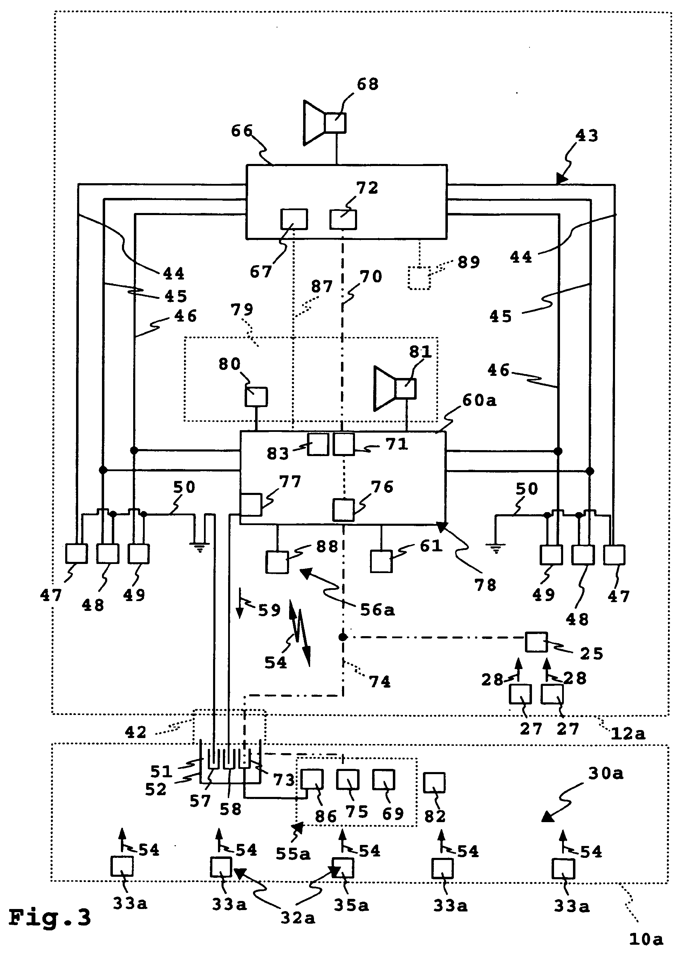

Beim Ausführungsbeispiel gemäß Figur 3 umfasst die Steuerungseinrichtung 60a integral eine Ankopplungsvorrichtung 78 zur Ankopplung der Überwachungseinrichtung 30a an das Kraftfahrzeug 12a. Es versteht sich, dass die vorgenannten Ankopplungsmittel 77 und/oder 76 und/oder 71 und/oder 88 selbstverständlich auch Bestandteil einer von einer Steuerungseinrichtung einer Anhängekupplung separaten Ankopplungsvorrichtung gebildet sein können.

Weiterhin umfasst die Steuerungseinrichtung 60a, 60b bzw. die Ankopplungsvorrichtung 78 in einer zweckmäßigen Ausgestaltung der Erfindung auch eigene Ausgabemittel 79, beispielsweise eine optische Anzeige 80, z.B. einen Monitor, LED-Leuchten oder dergleichen, und/oder akustische Ausgabemittel, beispielsweise einen Lautsprecher 81, zur Ausgebe der Überwachungsdaten 54 . Die Anzeige 80 und der Lautsprecher 81 können beispielsweise im Heckbereich des Kraftfahrzeugs 12a, beispielsweise auf einer Hutablage, angeordnet sein.

Es ist auch möglich, dass die Überwachungseinrichtung 30a das fahrzeugseitige Rückfahrsignal 59 beispielsweise über die Ankopplung an den Kommunikationsbus 70 erhält.

Ferner können beispielsweise auch Abschaltmittel 82 zum Abschalten der Kraftfahrzeug-Überwachungseinrichtung 25 diese Kommunikationsverbindung und Ankopplung an den Kommunikationsbus 70 nutzen. Die Abschaltmittel sind in einer zweckmäßigen Variante gleichzeitig Anschaltmittel und Aktivierungsmittel zum Aktivieren der Überwachungssensoren 32a bei Erhalt des Rückfahrsignals 59, so dass diese die Überwachungsdaten 54 erzeugen. Das Abschaltmittel 82 sendet dann ein Abschaltsignal zum Abschalten der Überwachungssensoren der Kraftfahrzeug-Überwachungseinrichtung 25, so dass sie, zumindest was die Überwachung des Heckbereichs 11 angeht, deaktiviert ist.

Es versteht sich, dass auch auf Seiten der Ankopplungsvorrichtung 78 eine entsprechende Abschaltfunktion für die Kraftfahrzeug-Überwachungseinrichtung 25 vorgesehen sein kann, beispielsweise in Gestalt von Abschaltmitteln 83, die auf dem Kommunikationsbus 70 ein Abschaltsignal in der Art der Abschaltmittel 83 senden.

Eine besonders bevorzugte, hier nicht im Detail erläuterte Ausführungsform der Erfindung kann vorsehen, dass die Abschaltmittel 82 und/oder 83 die Überwachungssensoren 32a sozusagen bei der Kraftfahrzeug-Überwachungseinrichtung 25 anmelden, so dass die Kraftfahrzeug-Überwachungseinrichtung 25 von fahrzeugseitigen Überwachungssensoren 27 erzeugte Überwachungsdaten 28 ignoriert und stattdessen die Überwachungsdaten 54 der Lastenträger-Überwachungseinrichtung 30a auswertet.

## Patentansprüche

1. Lastenträger, insbesondere Fahrradträger, zum Auflegen einer Last, der an einem Heckbereich (11) eines Kraftfahrzeugs (12a; 12b), insbesondere eines Personenkraftwagens, befestigbar ist und im montierten Zustand vor den Heckbereich (11) des Kraftfahrzeugs (12a; 12b) nach hinten vorsteht, wobei der Lastenträger eine Überwachungseinrichtung (30a; 30b; 30c) mit mindestens einem Überwachungssensor (32a; 32b; 32c) zur Überwachung eines Überwachungsraums (31) an mindestens einer von dem Kraftfahrzeug (12a; 12b) abgewandten freien Seite des Lastenträgers (10a; 10b; 10c) seitlich neben dem Lastenträger (10a; 10b; 10c) und/oder hinter dem Lastenträger (10a; 10b; 10c) aufweist, wobei die Überwachungseinrichtung (30a; 30b; 30c) an dem Lastenträger (10a; 10b; 10c) angeordnete Träger-Kommunikationsmittel (55a; 55b) zur Übertragung von durch den mindestens einen Überwachungssensor (32a; 32b; 32c) erzeugten Überwachungsdaten (54) an in dem Kraftfahrzeug (12a; 12b) angeordnete Fahrzeug-Kommunikationsmittel (56a; 56b) aufweist, und wobei der Lastenträger eine elektrische Kontakteinrichtung (51) zur elektrischen Verbindung mit einem Bordnetz (43) des Kraftfahrzeugs (12a; 12b) aufweist, **dadurch gekennzeichnet, dass** die elektrische Kontakteinrichtung (51) einen in eine Anhängersteckdose (42) des Kraftfahrzeugs (12a; 12b) einsteckbaren Stecker (52) umfasst.

2. Lastenträger nach Anspruch 1, **dadurch gekennzeichnet, dass** die Überwachungseinrichtung (30a; 30b; 30c) zu ihrer Stromversorgung und/oder zu ihrer Aktivierung mit einem Rückfahrsignalkontakt (58) einer elektrischen Kontakteinrichtung (51) zur elektrischen Verbindung mit einem Bordnetz (43) des Kraftfahrzeugs (12a; 12b) verbunden ist und/oder dass die Überwachungseinrichtung (30a; 30b; 30c) zum Empfang eines fahrzeugseitig erzeugten Rückfahrsignals (59), insbesondere über einen Bus (70) des Kraftfahrzeugs (12a; 12b), ausgestaltet ist.

3. Lastenträger nach Anspruch 1 oder 2, **dadurch gekennzeichnet, dass** die Fahrzeug-Kommunikationsmittel (56a; 56b) einen Bestandteil eines in dem Fahrzeug anordenbaren Empfangsgeräts (63) mit optischen und/oder akustischen Ausgabemitteln (64, 65) bilden.

4. Lastenträger nach einem der vorhergehenden Ansprüche, **dadurch gekennzeichnet, dass** die Träger-Kommunikationsmittel (55a; 55b) zu einer drahtlosen Kommunikation, insbesondere über Funk, mit den Fahrzeug-Kommunikationsmitteln (56a; 56b) ausgestaltet sind und/oder dass die Träger-Kommunikationsmittel (55a; 55b) eine Bus-Schnittstelle (75) zur Ankopplung an einen fahrzeugseitigen Kommunikationsbus (70), insbesondere einen LIN-Bus oder einen CAN-Bus, des Kraftfahrzeugs (12a; 12b) umfassen und/oder dass die Träger-Kommunikationsmittel (55a; 55b) einen Modulator (86) zum Aufmodulieren der Überwachungsdaten (54) auf ein Energiesignal zwischen dem Kraftfahrzeug (12a; 12b) und dem Lastenträger (10a; 10b; 10c) aufweisen, wobei die Überwachungsdaten (54) durch einen fahrzeugseitigen, insbesondere einen Bestandteil der Ankopplungsvorrichtung bildenden, Demodulator (77) zum Demodulieren der Überwachungsdaten (54) von dem Energiesignal demodulierbar sind.

5. Lastenträger nach einem der vorhergehenden Ansprüche, **dadurch gekennzeichnet, dass** der mindestens eine Überwachungssensor (32a; 32b; 32c) einen Distanzsensor (33a; 33b; 33c) zu einer insbesondere auf Ultraschall basierenden Messung einer Distanz zwischen dem Lastenträger (10a; 10b; 10c) und einem in dem Überwachungsraum (31) befindlichen Hindernis (34) umfasst und/oder dass der mindestens eine Überwachungssensor (32a; 32b; 32c) eine Kamera (35a; 35b) zur optischen Erfassung des Überwachungsraums (31) umfasst und die Überwachungsdaten (54) Bilddaten umfassen und/oder dass der mindestens ein Überwachungssensor (32a; 32b; 32c) in ein Bauteil, insbesondere ein Gestellbauteil (20a), einen Kennzeichenträger (22) oder eine Heckleuchte (21), des Lastenträgers (10a; 10b; 10c) integriert ist.

6. Lastenträger nach einem der vorhergehenden Ansprüche, **dadurch gekennzeichnet, dass** die Überwachungseinrichtung (30a; 30b; 30c) und/oder die fahrzeugseitige Ankopplungsvorrichtung (78) Abschaltmittel (82, 83) für eine Kraftfahrzeug-Überwachungseinrichtung (25) zur Überwachung eines Überwachungsraums (26) hinter dem Heckbereich (11) des Kraftfahrzeugs (12a; 12b) aufweist, wobei die Abschaltmittel (82) die Kraftfahrzeug-Überwachungseinrichtung (25) zumindest bei aktiver Lastenträger-Überwachungseinrichtung (30a; 30b; 30c) abschalten.

7. Lastenträger nach einem der vorhergehenden Ansprüche, **dadurch gekennzeichnet, dass** mindestens zwei Komponenten der Überwachungseinrichtung (30c), insbesondere mindestens einer der Überwachungssensoren (32a; 32b; 32c) und ein zweiter der Überwachungssensoren (32a; 32b; 32c) und/oder zumindest Teile der Träger-Kommunikationsmittel (55a; 55b), in einem gemeinsamen Schutzgehäuse (92) angeordnet sind, wobei das Schutzgehäuse (92) zweckmäßigerweise Verbindungsmittel (93), insbesondere Krallen, Haken oder Rastmittel, zum Verbindung mit einer Tragstruktur des Lastenträgers (10a; 10b; 10c).

8. Lastenträger nach einem der vorhergehenden Ansprüche, **dadurch gekennzeichnet, dass** die Überwachungseinrichtung (30c) elektrische Verbindungskontakte (95; 96) zur elektrischen Verbindung mit einem elektrischen Bauteil, insbesondere einer Heckleuchte (21), des Lastenträgers (10a; 10b; 10c) aufweist.

9. Lastenträger nach Anspruch 8, **dadurch gekennzeichnet, dass** die Verbindungskontakte (96) zum Einstecken eines elektrischen Steckers (52) Bestandteil einer insbesondere an einem Schutzgehäuse (92) der Überwachungseinrichtung (30c) angeordneten Anhängersteckdose (97) bilden, und dass die Überwachungseinrichtung (30c) einen mit der Anhängersteckdose (97) der Überwachungseinrichtung (30c) elektrisch verbundenen Anschlussstecker (98) zum elektrischen Anschluss an das Kraftfahrzeug (12a; 12b) aufweist.

10. Überwachungseinrichtung (30a; 30b; 30c) für einen Lastenträger (10a; 10b; 10c), insbesondere einen Fahrradträger, zum Auflegen einer Last, wobei der Lastenträger (10a; 10b; 10c) an einem Heckbereich (11) eines Kraftfahrzeugs (12a; 12b), insbesondere eines Personenkraftwagens, befestigbar ist und im montierten Zustand vor den Heckbereich (11) des Kraftfahrzeugs (12a; 12b) nach hinten vorsteht, wobei die Überwachungseinrichtung (30a; 30b; 30c) mit mindestens einem Überwachungssensor (32a; 32b; 32c) zur Überwachung eines Überwachungsraums (31) an mindestens einer von dem Kraftfahrzeug (12a; 12b) abgewandten freien Seite des Lastenträgers (10a; 10b; 10c) seitlich neben dem Lastenträger (10a; 10b; 10c) und/oder hinter dem Lastenträger (10a; 10b; 10c) aufweist, wobei die Überwachungseinrichtung (30a; 30b; 30c) an dem Lastenträger (10a; 10b; 10c) angeordnete Träger-Kommunikationsmittel (55a; 55b) zur Übertragung von durch den mindestens einen Überwachungssensor (32a; 32b; 32c) erzeugten Überwachungsdaten (54) an in dem Kraftfahrzeug (12a; 12b) angeordnete Fahrzeug-Kommunikationsmittel (56a; 56b) aufweist, und wobei sie eine elektrische Kontakteinrichtung (51) zur elektrischen Verbindung mit einem Bordnetz (43) des Kraftfahrzeugs (12a; 12b) aufweist, **dadurch gekennzeichnet, dass** die elektrische Kontakteinrichtung (51) einen in eine Anhängersteckdose (42) des Kraftfahrzeugs (12a; 12b) einsteckbaren Stecker (52) umfasst.

11. Überwachungseinrichtung nach Anspruch 10, **dadurch gekennzeichnet, dass** mindestens zwei Komponenten der Überwachungseinrichtung (30c), insbesondere mindestens einer der Überwachungssensoren (32a; 32b; 32c) und ein zweiter der Überwachungssensoren (32a; 32b; 32c) und/oder zumindest Teile der Träger-Kommunikationsmittel (55a; 55b), in einem gemeinsamen Schutzgehäuse (92) angeordnet sind.

12. System umfassend einen Lastenträger mit einer Überwachungseinrichtung (30a; 30b; 30c) nach einem der Ansprüche 2 bis 4 oder eine Überwachungseinrichtung nach Anspruch 10 oder 11 sowie eine Ankopplungsvorrichtung für ein Kraftfahrzeug (12a; 12b), insbesondere für einen Personenkraftwagen, zur Ankopplung der Überwachungseinrichtung (30a; 30b; 30c), wobei die Ankopplungsvorrichtung zur Anordnung an dem Kraftfahrzeug (12a; 12b) ausgestaltet ist und Fahrzeug-Kommunikationsmittel (56a; 56b) zum Empfang von durch den mindestens einen Überwachungssensor (32a; 32b; 32c) erzeugten Überwachungsdaten (54) aufweist.

13. System nach Anspruch 12, **dadurch gekennzeichnet, dass** die Ankopplungsvorrichtung optische und/oder akustische Ausgabemittel zur Ausgabe der Überwachungsdaten (54) aufweist und/oder Sendemittel zum Senden von aus den Überwachungsdaten (54) generierten Daten an eine fahrzeugseitige optische und/oder akustische Ausgabeeinrichtung aufweist.

14. System nach Anspruch 12 oder 13, **dadurch gekennzeichnet, dass** die Ankopplungsvorrichtung eine Bus-Schnittstelle (71) zur Ankopplung an einen fahrzeugseitigen Kommunikationsbus (70), insbesondere einen LIN-Bus oder einen CAN-Bus, des Kraftfahrzeugs (12a; 12b) aufweist, wobei sie zweckmäßigerweise zur Ausgabe der Überwachungsdaten (54) auf dem Kommunikationsbus (70) ausgestaltet ist.

15. System nach einem der Ansprüche 12 bis 14, **dadurch gekennzeichnet, dass** die Ankopplungsvorrichtung einen Bestandteil einer Steuerungseinrichtung (60a, 60b) zum Steuern einer Verriegelung und/oder eines Antriebs (61) einer Anhängekupplung (14) oder ein an eine solche Steuerung ankoppelbares Modul bildet.

## Claims

1. Load carrier, in particular cycle rack, for the placing of a load, which is attachable to the rear section (11) of a motor vehicle (12a; 12b), in particular a car, and in the fitted state extends beyond the rear section (11) of the motor vehicle (12a; 12b), wherein the load carrier has a monitoring device (30a; 30b; 30c) with at least one monitoring sensor (32a; 32b; 32c) for monitoring a monitoring space (31) on at least one free side of the load carrier (10a; 10b; 10c) facing away from the motor vehicle (12a; 12b), to the side of the load carrier (10a; 10b; 10c) and/or behind the load carrier (10a; 10b; 10c), wherein the monitoring device (30a; 30b; 30c) has carrier communication means (55a; 55b) mounted on the load carrier (10a; 10b; 10c) for the transmission of monitoring data (54) generated by at least one monitoring sensor (32a; 32b; 32c) to vehicle communication means (56a; 56b) mounted on the motor vehicle (12a; 12b), and wherein the load carrier has an electrical contact device (51) for electrical connection with a vehicle electrical system (43) of the motor vehicle (12a; 12b), **characterised in that** the electrical contact device (51) includes a plug connector (52) which may be plugged into a trailer socket (42) of the motor vehicle (12a; 12b).

2. Load carrier according to claim 1, **characterised in that** the monitoring device (30a; 30b; 30c) is connected, for its power supply and/or for its activation, to a reversing signal contact (58) of an electrical contact device (51) for electrical connection with a vehicle electrical system (43) of the motor vehicle (12a; 12b), and/or that the monitoring device (30a; 30b; 30c) is designed to receive a reversing signal (59) generated from the vehicle-side, in particular via a bus (70) of the motor vehicle (12a; 12b).

3. Load carrier according to claim 1 or 2, **characterised in that** the vehicle communication means (56a; 56b) form part of a receiver unit (63) with optical and/or audible output means (64, 65) which may be mounted in the vehicle.

4. Load carrier according to any of the preceding claims, **characterised in that** the carrier communication means (55a; 55b) are designed for wireless communication, in particular by radio, with the vehicle communication means (56a; 56b), and/or that the carrier communication means (55a; 55b) include a bus interface (75) for connection to a vehicle-side communications bus (70), in particular a LIN bus or a CAN bus, of the motor vehicle (12a; 12b), and/or that the carrier communication means (55a; 55b) have a modulator (86) for modulation of the monitoring data (54) on to a power signal between the motor vehicle (12a; 12b) and the load carrier (10a; 10b; 10c), wherein the monitoring data (54) may be demodulated by a vehicle-side demodulator (77), in particular forming a part of the connecting facility, for demodulating the monitoring data (54) from the power signal.

5. Load carrier according to any of the preceding claims, **characterised in that** the monitoring sensor or sensors (32a; 32b; 32c) include a distance sensor (33a; 33b; 33c) for measurement, in particular based on ultrasound, of the distance between the load carrier (10a; 10b; 10c) and an obstacle (34) located in the monitoring space (31), and/or that the monitoring sensor or sensors (32a; 32b; 32c) include a camera (35a; 35b) for optical coverage of the monitoring space (31) and the monitoring data (54) include image data, and/or that the monitoring sensor or sensors (32a; 32b; 32c) is or are integrated in a component, in particular a frame component (20a), a license plate support (22) or a taillight (21) of the load carrier (10a; 10b; 10c).

6. Load carrier according to any of the preceding claims. **characterised in that** the monitoring device (30a; 30b; 30c) and/or the vehicle-side connecting facility (78) have switch-off means (82, 83) for a motor vehicle monitoring device (25) for monitoring a monitoring space (26) behind the rear section (11) of the motor vehicle (12a; 12b), wherein the switch-off means (82) switch off the motor vehicle monitoring device (25) at least when the load carrier monitoring device (30a; 30b; 30c) is active.

7. Load carrier according to any of the preceding claims, **characterised in that** at least two components of the monitoring device (30c), in particular at least one of the monitoring sensors (32a; 32b; 32c) and a second of the monitoring sensors (32a; 32b; 32c) and/or at least parts of the carrier communication means (55a; 55b) are mounted in a common protective casing (92), wherein the protective casing (92) expediently has connection means (93), in particular claws, hooks or latching means, for connection with a support structure of the load carrier (10a; 10b; 10c).

8. Load carrier according to any of the preceding claims, **characterised in that** the monitoring device (30c) has electrical connection contacts (95; 96) for electrical connection with an electrical component, in particular a taillight (21), of the load carrier (10a; 10b; 10c).

9. Load carrier according to claim 8, **characterised in that** the connection contacts (96) form part of a trailer socket (97) located in particular on a protective casing (92) of the monitoring device (30c), for the plugging-in of an electrical plug connector (52), and that the monitoring device (30c) has a connecting plug (98), electrically connected to the trailer socket (97) of the monitoring device (30c), for electrical connection to the motor vehicle (12a; 12b).

10. Monitoring device (30a; 30b; 30c) for a load carrier (10a; 10b; 10c), in particular a cycle rack, for the placing of a load, wherein the load carrier (10a; 10b; 10c) is attachable to the rear section (11) of a motor vehicle (12a; 12b), in particular a car, and in the fitted state extends beyond the rear section (11) of the motor vehicle (12a; 12b), wherein the load carrier has a monitoring device (30a; 30b; 30c) with at least one monitoring sensor (32a; 32b; 32c) for monitoring a monitoring space (31) on at least one free side of the load carrier (10a; 10b; 10c) facing away from the motor vehicle (12a; 12b), to the side of the load carrier (10a; 10b; 10c) and/or behind the load carrier (10a; 10b; 10c), wherein the monitoring device (30a; 30b; 30c) has carrier communication means (55a; 55b) mounted on the load carrier (10a; 10b; 10c) for the transmission of monitoring data (54) generated by at least one monitoring sensor (32a; 32b; 32c) to vehicle communication means (56a; 56b) mounted on the motor vehicle (12a; 12b), and wherein the load carrier has an electrical contact device (51) for electrical connection with a vehicle electrical system (43) of the motor vehicle (12a; 12b), **characterised in that** the electrical contact device (51) includes a plug connector (52) which may be plugged into a trailer socket (42) of the motor vehicle (12a; 12b).

11. Monitoring device according to claim 10, **characterised in that** at least two components of the monitoring device (30c), in particular at least one of the monitoring sensors (32a; 32b; 32c) and a second of the monitoring sensors (32a; 32b; 32c) and/or at least parts of the carrier communication means (55a; 55b) are mounted in a common protective casing (92).

12. System comprising a load carrier with a monitoring device (30a; 30b; 30c) according to any of claims 2 to 4 or a monitoring device according to claim 10 or 11, together with a connecting facility for a motor vehicle (12a; 12b), in particular for a car, for connecting the monitoring device (30a; 30b; 30c), wherein the connecting facility is designed for fitting to the motor vehicle (12a; 12b) and has vehicle communication means (56a; 56b) to receive monitoring data (54) generated by the monitoring sensor or sensors (32a; 32b; 32c).

13. System according to claim 12, **characterised in that** the connecting facility has optical and/or audible output means to output the monitoring data (54) and/or transmission means for transmission of data generated from the monitoring data (54) to a vehicle-side optical and/or audible output device.

14. System according to claim 12 or 13, **characterised in that** the connecting facility has a bus interface (71) for connection to a vehicle-side communications bus (70), in particular a LIN bus or a CAN bus, of the motor vehicle (12a; 12b), wherein it is expediently designed to output the monitoring data (54) to the communications bus (70).

15. System according to any of claims 12 to 14, **characterised in that** the connecting facility forms part of a control unit (60a, 60b) for controlling locking and/or a drive (61) of a trailer coupling (14) or a module which may be connected to such a controller.

## Revendications

1. Support de charge, en particulier porte-vélo, pour la pose d'une charge qui peut être fixée à l'arrière (11) d'un véhicule automobile (12a ; 12b), en particulier une voiture, et dépasse, à l'état monté, de la zone arrière (11) du véhicule automobile (12a ; 12b) vers l'arrière, le support de charge présentant un dispositif de surveillance (30a ; 30b ; 30c) avec au moins un capteur de surveillance (32a ; 32b ; 32c) pour la surveillance d'un espace de surveillance (31) sur au moins un côté libre éloigné du véhicule automobile (12a ; 12b) du support de charge (10a ; 10b ; 10c) latéralement à côté du support de charge (10a; 10b; 10c) et/ou derrière le support de charge (10a; 10b; 10c), le dispositif de surveillance (30a ; 30b ; 30c) présentant des moyens de communication de support (55a ; 55b) agencés sur le support de charge (10a ; 10b ; 10c) pour la transmission de données de surveillance (54) générées par l'au moins un capteur de surveillance (32a ; 32b ; 32c) sur des moyens de communication de véhicule (56a ; 56b) agencés dans le véhicule automobile (12a ; 12b), et le support de charge présentant un dispositif de contact électrique (51) pour la liaison électrique avec un réseau de bord (43) du véhicule automobile (12a ; 12b), **caractérisé en ce que** le dispositif de contact électrique (51) comporte une fiche (52) enfichable dans une prise de remorque (42) du véhicule automobile (12a ; 12b).

2. Support de charge selon la revendication 1, **caractérisé en ce que** le dispositif de surveillance (30a ; 30b ; 30c) est relié pour son alimentation en courant et/ou pour son activation à un contact de signal de marche arrière (58) d'un dispositif de contact (51) électrique pour la liaison électrique avec un réseau de bord (43) du véhicule automobile (12a ; 12b) et/ou **en ce que** le dispositif de surveillance (30a ; 30b ; 30c) est configuré pour la réception d'un signal de marche arrière (59) généré côté véhicule, en particulier par le biais d'un bus (70) du véhicule automobile (12a ; 12b).

3. Support de charge selon la revendication 1 ou 2, **caractérisé en ce que** les moyens de communication de véhicule (56a ; 56b) sont un constituant d'un appareil de réception (63) pouvant être agencé dans le véhicule avec des moyens de sortie optiques et/ou acoustiques (64, 65).

4. Support de charge selon l'une quelconque des revendications précédentes, **caractérisé en ce que** les moyens de communication de support (55a ; 55b) sont configurés pour une communication sans fil, en particulier par radio, avec les moyens de communication de véhicule (56a ; 56b) et/ou **en ce que** les moyens de communication de support (55a ; 55b) comportent une interface de bus (75) pour le couplage à un bus de communication (70) côté véhicule, en particulier un bus LIN ou un bus CAN du véhicule automobile (12a ; 12b) et/ou **en ce que** les moyens de communication de support (55a ; 55b) présentent un modulateur (86) pour la modulation des données de surveillance (54) sur un signal d'énergie entre le véhicule automobile (12a ; 12b) et le support de charge (10a ; 10b ; 10c), les données de surveillance (54) étant démodulables par un démodulateur (77) côté véhicule formant en particulier un constituant du dispositif de couplage pour la démodulation des données de surveillance (54) du signal d'énergie.

5. Support de charge selon l'une quelconque des revendications précédentes, **caractérisé en ce que** l'au moins un capteur de surveillance (32a ; 32b ; 32c) comporte un capteur de distance (33a ; 33b ; 33c) pour une mesure se basant en particulier sur l'ultrason d'une distance entre le support de charge (10a ; 10b ; 10c) et un obstacle (34) se trouvant dans l'espace de surveillance (31) et/ou **en ce que** l'au moins un capteur de surveillance (32a ; 32b ; 32c) comporte une caméra (35a ; 35b) pour la détection optique de l'espace de surveillance (31) et les données de surveillance (54) comportent des données d'image et/ou **en ce que** l'au moins un capteur de surveillance (32a ; 32b ; 32c) est intégré dans un composant, en particulier un composant de bâti (20a), un support d'identification (22) ou un feu arrière (21), du support de charge (10a ; 10b ; 10c).

6. Support de charge selon l'une quelconque des revendications précédentes, **caractérisé en ce que** le dispositif de surveillance (30a ; 30b ; 30c) et/ou le dispositif de couplage (78) côté véhicule présente des moyens d'arrêt (82, 83) pour un dispositif de surveillance de véhicule automobile (25) pour la surveillance d'un espace de surveillance (26) derrière la zone arrière (11) du véhicule automobile (12a, ; 12b), les moyens d'arrêt (82) arrêtant le dispositif de surveillance de véhicule automobile (25) au moins en cas de dispositif de surveillance de support de charge (30a ; 30b ; 30c) actif.

7. Support de charge selon l'une quelconque des revendications précédentes, **caractérisé en ce qu'**au moins deux composants du dispositif de surveillance (30c), en particulier au moins l'un des capteurs de surveillance (32a ; 32b ; 32c), et un second des capteurs de surveillance (32a ; 32b ; 32c) et et/ou au moins des parties des moyens de communication de support (55a ; 55b) sont agencées dans un boîtier de protection commun (92), le boîtier de protection (92) présentant de manière appropriée des moyens de liaison (93), en particulier des griffes, des crochets ou moyens d'encliquetage pour la liaison avec une structure porteuse du support de charge (10a ; 10b ; 10c).

8. Support de charge selon l'une quelconque des revendications précédentes, **caractérisé en ce que** le dispositif de surveillance (30c) présente des contacts de liaison électriques (95 ; 96) pour la liaison électrique avec un composant électrique, en particulier un feu arrière (21), du support de charge (10a ; 10b ; 10c).

9. Support de charge selon la revendication 8, **caractérisé en ce que** les contacts de liaison (96) sont un constituant d'une prise de remorque (97) agencée en particulier sur un boîtier de protection (92) du dispositif de surveillance (30c) pour l'enfichage d'une fiche électrique (52), et **en ce que** le dispositif de surveillance (30c) présente une fiche de raccordement (98) reliée électriquement à la prise de remorque (97) du dispositif de surveillance (30c) pour le raccordement électrique au véhicule automobile (12a ; 12b).

10. Dispositif de surveillance (30a ; 30b ; 30c) pour un support de charge (10a ; 10b ; 10c), en particulier un porte-vélo, pour la pose d'une charge, le support de charge (10a ; 10b ; 10c) pouvant être fixé sur une zone arrière (11) d'un véhicule automobile (12a ; 12b), en particulier d'un véhicule automobile personnel et dépasse, à l'état monté, de la zone arrière (11) du véhicule automobile (12a ; 12b) vers l'arrière, le dispositif de surveillance (30a ; 30b ; 30c) présentant au moins un capteur de surveillance (32a ; 32b ; 32c) pour la surveillance d'un espace de surveillance (31) sur au moins un côté libre éloigné du véhicule automobile (12a; 12b) du support de charge (10a; 10b; 10c) latéralement à côté du support de charge (10a ; 10b ; 10c) et/ou derrière le support de charge (10a ; 10b ; 10c), le dispositif de surveillance (30a ; 30b ; 30c) présentant des moyens de communication de support (55a ; 55b) agencés sur le support de charge (10a ; 10b, 10c) pour la transmission de données de surveillance (54) générées par l'au moins un capteur de surveillance (32a ; 32b ; 32c) sur des moyens de communication de véhicule (56a ; 56b) agencés dans le véhicule automobile (12a ; 12b) et celui-ci présentant un dispositif de contact électrique (51) pour la liaison électrique avec un réseau de bord (43) du véhicule automobile (12a ; 12b), **caractérisé en ce que** le dispositif de contact électrique (51) comporte une fiche (52) enfichable dans une prise de remorque (42) du véhicule automobile (12a ; 12b).

11. Dispositif de surveillance selon la revendication 10, **caractérisé en ce qu'**au moins deux composants du dispositif de surveillance (30c), en particulier au moins l'un des capteurs de surveillance (32a ; 32b ; 32c) et un second des capteurs de surveillance (32a ; 32b ; 32c) et/ou au moins des parties des moyens de communication de support (55a ; 55b) sont agencées dans un boîtier de protection commun (92).

12. Système comprenant un support de charge avec un dispositif de surveillance (30a ; 30b ; 30c) selon l'une quelconque des revendications 2 à 4 ou un dispositif de surveillance selon la revendication 10 ou 11 ainsi qu'un dispositif de couplage pour un véhicule automobile (12a ; 12b), en particulier pour un véhicule automobile personnel, pour le couplage du dispositif de surveillance (30a ; 30b ; 30c), le dispositif de couplage étant configuré pour l'agencement sur le véhicule automobile (12a ; 12b) et présentant des moyens de communication de véhicule (56a ; 56b) pour la réception de données de surveillance (54) générées par l'au moins un capteur de surveillance (32a ; 32b ; 32c).

13. Système selon la revendication 12, **caractérisé en ce que** le dispositif de couplage présente des moyens de sortie optiques et/ou acoustiques pour la sortie de données de surveillance (54) et/ou présente des moyens d'émission pour l'émission de données générées à partir des données de surveillance (54) sur un dispositif de sortie optique et/ou acoustique côté véhicule.

14. Système selon la revendication 12 ou 13, **caractérisé en ce que** le dispositif de couplage présente une interface de bus (71) pour le couplage à un bus de communication côté véhicule (70), en particulier un bus LIN ou un bus CAN du véhicule automobile (12a ; 12b), celui-ci étant configuré de manière appropriée pour la sortie des données de surveillance (54) sur le bus de communication (70).

15. Système selon l'une quelconque des revendications 12 à 14, **caractérisé en ce que** le dispositif de couplage est un constituant d'un dispositif de commande (60a, 60b) pour la commande d'un verrouillage et/ou d'un entraînement (61) d'un attelage (14) ou un module pouvant être couplé à une telle commande.
